Europäisches Patentamt

European Patent Office

Office européen des brevets

(19)

(11) Veröffentlichungsnummer: **0 054 050**
**B1**

(12) **EUROPÄISCHE PATENTSCHRIFT**

(45) Veröffentlichungstag der Patentschrift:
**10.04.85**

(21) Anmeldenummer: **81901808.6**

(22) Anmeldetag: **19.06.81**

(86) Internationale Anmeldenummer:
**PCT/DE 81/00093**

(87) Internationale Veröffentlichungsnummer:
**WO 81/03680 (24.12.81** Gazette 81/30)

(51) Int. Cl.⁴: **F 01 K 17/02, F 24 D 3/00**

(54) **VERFAHREN UND VORRICHTUNG ZUR GEREGELTEN WÄRMEÜBERGABE AUS EINEM PRIMÄREN DAMPFNETZ AN EINEN WÄRMEVERBRAUCHER.**

(30) Priorität: **19.06.80 DE 3022795**

(43) Veröffentlichungstag der Anmeldung:
**23.06.82 Patentblatt 82/25**

(45) Bekanntmachung des Hinweises auf die Patenterteilung:
**10.04.85 Patentblatt 85/15**

(84) Benannte Vertragsstaaten:
**AT CH FR GB LI NL SE**

(56) Entgegenhaltungen:
**BE - A - 354 341**
**BE - A - 431 189**
**DE - A - 2 225 263**

(73) Patentinhaber: **Bälz, Helmut, Koepffstrasse 5,
D-7100 Heilbronn (DE)**

(72) Erfinder: **Bälz, Helmut, Koepffstrasse 5,
D-7100 Heilbronn (DE)**

(74) Vertreter: **Patentanwälte Dipl.-Ing. W. Scherrmann
Dr.-Ing. R. Rüger, Webergasse 3, D-7300 Esslingen (DE)**

EP 0 054 050 B1

## Beschreibung

Die Erfindung betrifft ein Verfahren zur geregelten Wärmeübergabe aus einem primären Dampfnetz an einen Wärmeverbraucher, dessen Vorlauf unter einem vorbestimmten, den hydrostatischen Druck übersteigenden, Überdruck zugeführt wird und dessen Rücklauf unter einem niedrigeren Druck steht. Ein solches Verfahren ist z.B. bekannt aus Recknagel-Sprenger, Taschenbuch für Heizung und Klimatechnik, München/Wien, 1979, Fig. 233–30. Ausserdem bezieht sich die Erfindung auf eine Vorrichtung zur Durchführung dieses Verfahrens mit einem dampfseitig in Abhängigkeit von dem Wärmeverbrauch bei dem Verbraucher geregelten Wärmetauscher.

Bei der Wärmeversorgung eines Wärmeverbrauchers aus einem Dampfnetz ist es bekannt, zwischen dem Dampfnetz und dem Wärmeverbraucher einen Wärmetauscher vorzusehen, der entweder dampf- oder kondensatseitig geregelt ist und in dessen Sekundärkreislauf der Wärmeverbraucher liegt. In dem Sekundärkreislauf ist dabei eine Pumpe erforderlich, um den nötigen Vorlaufdruck zu erzeugen.

Die primärseitige, zwischen der Dampf-Zufuhrleitung und der Kondensat-Rücklaufleitung vorhandene Druckdifferenz wird lediglich dazu benutzt, die primärseitige Durchströmung des Wärmetauschers zu gewährleisten; sie erfordert einen entsprechenden Aufwand an Armaturen, an denen Energieverluste auftreten.

Eine ähnliche, jedoch weder dampf- noch kondensatseitig geregelte Wärmeversorgung ist in der rechten Hälfte von Bild 223–28 aus «Taschenbuch für Heizung und Klimatechnik» dargestellt, wobei Anzapfdampf aus einer Turbine einem Kaskadenvorwärmer zur Heisswassererzeugung zugeführt wird. In dem Kaskadenvorwärmer wird der Rücklauf von den an den Kaskadenvorwärmer angeschlossenen Wärmeverbrauchern mit dem zulaufenden Anzapfdampf gemischt und so erneut aufgeheizt. An der tiefsten Stelle des Kaskadenvorwärmers wird das gewonnene Heisswasser als Vorlauf für die Wärmeverbraucher entnommen und mittels einer Pumpe den Wärmeverbrauchern zugeführt. Zur Temperaturregelung des Vorlaufs der Wärmeverbraucher ist in der Vorlaufleitung ein Mischventil vorgesehen, über dem kalter Rücklauf aus den Wärmeverbrauchern zugemischt wird.

Auch bei dieser Art der Wärmeversorgung wird in dem Sekundärkreislauf eine mechanisch angetriebene Pumpe genötigt, um den nötigen Vorlaufdruck zu erzeugen.

Die DE-A-22 25 263 zeigt lediglich, dass es im Zusammenhang mit Warmwasserheizungs- und -bereitungsanlagen bekannt ist, verstellbare Strahlpumpen zu verwenden, mit denen Rücklaufwasser angesaugt und dem Vorlauf zugemischt wird; die Energie zum Ansaugen des Rücklaufwassers stammt aus dem Vorlauf.

Aufgabe der Erfindung ist es, einen Weg zu weisen, der es gestattet, bei der Wärmeübergabe aus einem primären Dampfnetz an einen Wärmeverbraucher den vorhandenen Dampfdruck des Dampfnetzes auszunutzen, um damit Treibenergie für den Vorlauf des Wärmeverbrauchers zu gewinnen.

Zur Lösung dieser Aufgabe wird erfindungsgemäss derart vorgegangen, dass der in Abhängigkeit von dem Wärmeverbrauch bei dem Verbraucher aus dem Dampfnetz entnommene Dampf durch Wärmeentzug mittels eines flüssigen Sekundärmediums, unter Aufrechterhaltung eines vorbestimmten Überdruckes gegenüber dem Vorlaufdruck des Wärmeverbrauchers, bis zur Kondensation abgekühlt und der Überdruck in einer Strahlpumpe sodann unter Erzeugung einer entsprechenden Treibenergie für den Vorlauf auf den Vorlaufdruck des Wärmeverbrauchers abgebaut wird und dabei dem Vorlauf bei der Auskühlung des Dampfes aufgeheiztes Sekundärmedium zugemischt wird.

Das kalte Sekundärmedium kann dabei zweckmässigerweise von dem ausgekühlten Rücklauf des Wärmeverbrauchers abgezweigt werden.

Bei diesem Verfahren wird der Dampfdruck des Dampfnetzes unmittelbar zur Erzeugung von Treibenergie für den Vorlauf des Wärmeverbrauchers ausgenutzt, so dass auf eine eigene elektrische Umwälzpumpe für den Wärmeverbraucher entweder verzichtet oder, falls eine solche im Hinblick auf den Anlagenwiderstand erforderlich sein sollte, diese für wesentlich kleinere Leistung ausgelegt werden kann.

Die eingangs genannte, zur Durchführung dieses Verfahrens bestimmte Vorrichtung ist gemäss weiterer Erfindung dadurch gekennzeichnet, dass der über ein Regelventil an das Dampfnetz angeschlossene und den zugeführten Dampf bis zur Kondensation auskühlende Wärmetauscher kondensatseitig mit der Treibdüse einer in der Vorlaufleitung des Wärmeverbrauchers liegenden Strahlpumpe verbunden ist, deren Treibdüse mit dem unter einem vorbestimmten Überdruck stehenden Kondensat beaufschlagt ist, wobei die Strahlpumpe saugseitig in einem Sekundärkreislauf des Wärmetauschers liegt, in dem von dem Dampf aufgeheiztes Sekundärmedium fliesst, das über die Strahlpumpe in vorbestimmtem Anteil dem Vorlauf des Wärmeverbrauchers zumischbar ist.

Die Anordnung ist zweckmässigerweise derart getroffen, dass der Sekundärkreislauf des Wärmetauschers von der über entsprechende Regeleinrichtungen unmittelbar an die Kondensatleitung des Dampfnetzes angeschlossenen Rücklaufleitung des Wärmeverbrauchers abzweigt.

Die Strahlpumpe ist mit dem Vorteil regelbar ausgebildet, um eine Anpassung an die Bedingungen des Wärmetauschers zu ermöglichen.

Falls, wie erwähnt, die von der Strahlpumpe erzeugte Treibenergie nicht ausreicht, kann in der Vorlaufleitung des Wärmeverbrauchers strömungsmässig hinter der Strahlpumpe eine zusätzliche Druckerhöhungspumpe liegen. Diese Druckerhöhungspumpe braucht jedoch lediglich für einen Teildruck ausgelegt werden; sie kann auch lediglich zeitweise wirksam sein, indem sie beispielsweise über einen Differenzdruckschalter zeitweilig ausser Betrieb gesetzt wird, womit elektrische Energie eingespart wird.

In der Rücklaufleitung des Wärmeverbrauchers liegt mit Vorteil strömungsmässig hinter dem Abzweig des Sekundärkreislaufes des Wärmetauschers ein Druckhalteventil, das ein Leerlaufen der Anlage verhindert.

Der Dampfdruck sorgt für die Aufrechterhaltung des Mindestdrucks in der ganzen Anlage, wobei die von Temperaturschwankungen herrührenden Volumenänderungen von dem Dampfdruck in Verbindung mit dem Druckhalteventil ausgeglichen werden. Damit erübrigen sich die Anordnung eines Volumenausgleichbehälters oder die sonst notwendigen oder sehr aufwendigen Druckhalteeinrichtungen. Gleichzeitig werden Ausdampfungen im Wasserkreislauf vermieden.

Der Wärmetauscher kann zusätzlich einen Brauchwassererwärmer enthalten. Auch kann die Anordnung derart getroffen sein, dass der Wärmetauscher im Bereiche des Sekundärmediumeintritts zusätzlich an eine Entwässerungsleitung des Dampfnetzes angeschlossen ist. Damit kann noch der Wärmeinhalt des sonst über die Entwässerungsleitung abströmenden Kondensates ausgenutzt werden.

Konstruktiv kann der Wärmetauscher mit Vorteil derart ausgebildet sein, dass er wenigstens eine dampfgespeiste, ausgangseitig an die Treibdüse angeschlossene Rohrschlange enthält, während die Fangdüse der Strahlpumpe unmittelbar an einen entsprechenden Anschlussstutzen des Wärmetauscherkopfes angeschlossen ist.

In der Zeichnung sind Ausführungsbeispiele des Gegenstandes der Erfindung dargestellt. Es zeigen jeweils in schematischer Darstellung:

Fig. 1 eine Vorrichtung gemäss der Erfindung zur geregelten Wärmeübergabe aus einem primären Dampfnetz an einen Wärmeverbraucher,
Fig. 2 den Wärmetauscher der Vorrichtung nach Fig. 1 im Ausschnitt und in einer abgewandelten Ausführungsform, und
Fig. 3 den Wärmetauscher der Vorrichtung nach Fig. 1 in einer anderen Ausführungsform im axialen Schnitt, in einer Seitenansicht.

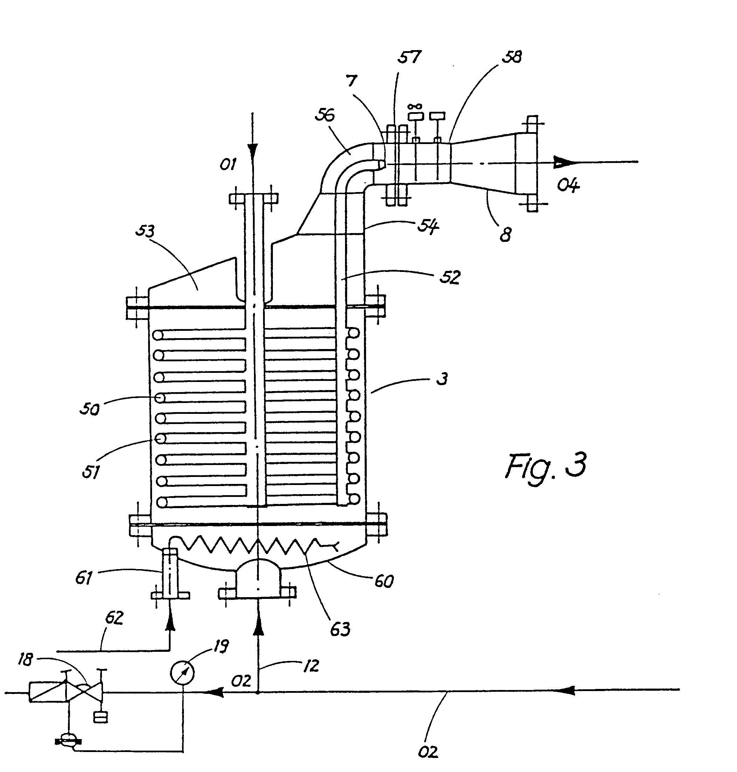

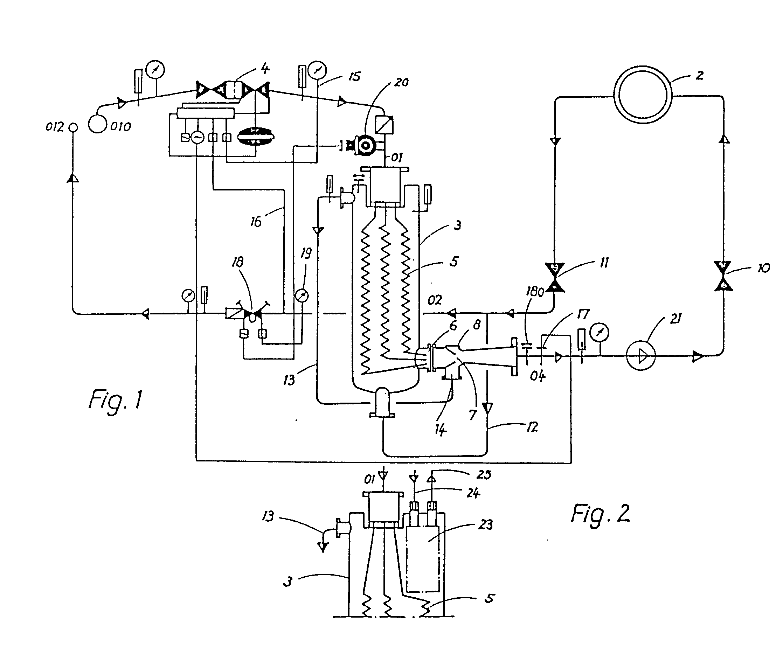

In Fig. 1 ist eine Dampf-Wasser-Heizanlage veranschaulicht, die dazu dient, aus einem primären Dampfnetz 010 Wärme an einen bei 2 dargestellten Wärmeverbraucher zu übergeben. Der Wärmeverbraucher kann je nach der Ausbildung der Anlage als Heizungs-, Lüftungs-, Klima-, Produktions- oder Brauchwasserbereitungsanlage von Heizkörpern oder -registern, Heizeinrichtungen und dergl. gebildet sein.

Die Anlage weist einen Wärmetauscher 3 auf, der über ein Mehrzweckregelventil 4 und eine Dampfzufuhrleitung 01 an das Dampfnetz 010 angeschlossen ist. Der Wärmetauscher 3 enthält ein mit dem Dampf gespeistes Rohrschlangenbündel 5, das bei 6 mit der Treibdüse 7 einer Strahlpumpe 8 verbunden ist, die unmittelbar an den Wärmetauscher 3 angeflanscht ist. Die Strahlpume 8 liegt in der Vorlaufleitung 04 des Wärmeverbrauchers 2, dessen Rücklaufleitung 02 an die Kondensatrückführleitung 012 angeschlossen ist. In der dem Wärmeverbraucher 2 zugeordneten Vorlaufleitung 04 und in der Rücklaufleitung 02 liegen jeweils ein Absperrventil 10 bzw. 11. Von der Rücklaufleitung 02 zweigt eine Leitung 12 ab, über die ausgekühltes Kondensat in einem Sekundärkreislauf in den Wärmetauscher 3 rückgeführt und dort im Gegenstrom zu dem Dampf erwärmt wird. Dieses so erwärmte Sekundärmedium wird sodann über eine Leitung 13, die an den Saugstutzen 14 der Strahlpumpe 8 angeschlossen ist, abgesaugt und dem Vorlauf des Wärmeverbrauchers 2 in vorbestimmter Menge zugemischt.

Das Mehrzweckregelventil 4 überwacht über einen Druckfühler 15 den Dampfdruck vor dem Wärmetauscher 3 und über eine Impulsleitung 16 den Kondensatdruck in der Rücklaufleitung 02. Ausserdem findet über einen in der Vorlaufleitung 04 liegenden Temperaturfühler 17 eine Überwachung der Vorlauftemperatur des Wärmeverbrauchers 2 statt, wobei dem Temperaturfühler 17 ein Sicherheitsthermostat 180 vorgeschaltet ist, bei dessen Ansprechen die Dampfzufuhr zu dem Wärmetauscher 3 abgesperrt wird.

In der Rücklaufleitung 02 liegt ein Druckhalteventil 18, das strömungsmässig hinter dem Abzweig der Leitung 12 angeordnet ist und das über einen Druckfühler 19 den Druck in der Rücklaufleitung 02 auf einem vorbestimmten Wert hält. Es verhindert gleichzeitig ein Leerlaufen der Anlage, wenn der Druck im Kondensatnetz 012 zusammenbrechen sollte. Ein in der Dampfzufuhrleitung 01 liegender Niveaubegrenzer 20 überwacht die Kondensatanstauhöhe in dem Wärmetauscher 3 und gibt bei der Überschreitung eines eingestellten Grenzniveaus auf das Ventil 18 einen kurzen Öffnungsimpuls, und zwar auch dann, wenn keine Wärmeleitung abgenommen wird. Damit ist die Entwässerung der Dampfleitung 01 stets gesichert.

Dampf strömt über die Dampfzufuhrleitung 01 in das Rohrbündel 5 des Wärmetauschers 3 ein, wobei das Mehrzweckregelventil 4 entsprechend der bei 17 gemessenen Temperatur in der Vorlaufleitung 04 die Dampfzufuhr regelt. Das Rohrbündel 5 ist derart bemessen und aufgebaut, dass in ihm das Wärmegefälle des Dampfes abgebaut wird, so dass der Dampf am Rohrbündelende gerade vollständig kondensiert ist, ohne dass ein unzulässig hoher Druckabfall entsteht. Bei 6, d.h. am Eintritt der Treibdüse 7 der Strahlpumpe 8 herrscht ein bestimmter Überdruck, der derart bemessen ist, dass er für den Betrieb der Strahlpumpe 8 ausreicht, die daraus Treibenergie für den Vorlauf zu dem Wärmeverbraucher 2 erzeugt.

Die Wärme wird dem Dampf durch das das Rohrschlangenbündel 5 im Gegenstrom umspülende, über die Leitung 12 von der Rücklaufleitung 02 abgezweigte ausgekühlte Heizmedium entzogen, das dabei aufgeheizt wird und das schliesslich, wie bereits erwähnt, über die Leitung 13 und die Strahlpumpe 8 dem Vorlauf des Wärmeverbrauchers 2 zugemischt wird.

Für den Fall, dass die von der Strahlpumpe 8 erzeugte Treibenergie nicht ausreicht, kann in der Vorlaufleitung 04 eine zusätzliche, bei 21 gestrichelt angedeutete Druckerhöhungspumpe vorgesehen sein, die lediglich auf den noch erforderlichen Teildruck ausgelegt werden muss. Die Druckerhöhungspumpe 21 kann über einen Differenzdruckschalter, der auf die an dem Wärmeverbraucher 2 auftretende Druckdifferenz anspricht, zeitweise ausser Betrieb gesetzt werden, so dass elektrische Energie gespart wird.

Durch den Dampfdruck wird im Zusammenwirken mit dem Druckhalteventil 18 der Mindestdruck in der Anlage dauernd aufrecht erhalten, womit Ausdampfungen im Wasserkreislauf, d.h. in der Vorlaufleitung 04 und in der Rücklaufleitung 02, sowie in den Leitungen 12, 13 und in dem Wärmetauscher 3, verhindert werden. Die von Temperaturschwankungen herrührenden Volumenänderungen des Heizmediums werden mit dem Dampfdruck im Zusammenwirken mit dem Druckhalteventil 18 ausgeglichen, so dass sich eigene Volumenausgleichsbehälter oder sonstige aufwendige Druckhalteeinrichtungen erübrigen.

In den Wärmetauscher 2 kann in der aus Fig. 2 ersichtlichen Weise zusätzlich noch ein Warmwasserbereiter 23 eingebaut sein, der über Leitungen 24, 25 in einem eigenen, nicht weiter dargestellten Warmwasserkreislauf liegt.

In Fig. 3 ist eine abgewandelte konstruktive Ausbildung des Wärmetauschers 3 veranschaulicht: Das Rohrschlangenbündel 50 ist korb- oder schirmartig aus einer Anzahl koaxial zueinander angeordneter, kreisringförmiger Rohrschlangen aufgebaut, die an ein Kondensatrohr 52 angeschlossen sind, das unmittelbar in die Treibdüse 7 mündet. Der dem Dampfeintritt zugeordnete Kopf 53 des Wärmetauschers 3 ist mit einem zu dem Kondensatrohr 52 koaxialen Anschlussstutzen 54 ausgebildet, der eine im wesentlichen kegelstumpfförmige Gestalt aufweist und über einen Rohrkrümmer 56 unmittelbar mit der bei 57 angeflanschten Fangdüse 58 der Strahlpumpe 8 verbunden ist.

In dem anderen Kopf 60 des Wärmetauschers 3 ist ein Anschlussstutzen 61 für eine bei 62 angedeutete Entwässerungsleitung des Dampfnetzes 010 eingefügt, an den eine in dem Kopf 60 untergebrachte Rohrschlange 63 angeschlossen ist. Über die Leitung 62 wird von der Entwässerung des Dampfnetzes herrührendes Kondensat in den Sekundärkreislauf des Wärmetauschers 3 eingeführt, wodurch sich eine zusätzliche Wärmerückgewinnung ergibt. Die Rohrschlange 63 dient dazu, unerwünschte Geräusch- und Vibrationserscheinungen beim Einleiten des von dem Dampfnetz stammenden Kondensates zu verhüten.

Die Ausbildung des Wärmetauschers 3 nach Fig. 3 ist speziell für die in Fig. 1 veranschaulichte Anlage geschaffen; der Wärmetauscher bildet mit der Strahlpumpe 8 eine konstruktive Einheit, wobei der die Strahlpumpe 8 tragende Kopf 53 derart gestaltet ist, dass eine möglichst verlust- und geräuschlose Zufuhr des erwärmten Heizmediums zu der Strahlpumpe 8 gewährleistet ist. Die in Fig. 1 dargestellte Leitung 13 entfällt, womit sich eine wesentliche Vereinfachung ergibt.

## Patentansprüche

1. Verfahren zur geregelten Wärmeübergabe aus einem primären Dampfnetz an einen Wärmeverbraucher, dessen Vorlauf unter einem vorbestimmten, den hydrostatischen Druck übersteigenden Überdruck zugeführt wird und dessen Rücklauf unter einem niedrigeren Druck steht, dadurch gekennzeichnet, dass der in Abhängigkeit von dem Wärmeverbrauch bei dem Verbraucher aus dem Dampfnetz entnommene Dampf durch Wärmeentzug mittels eines flüssigen Sekundärmediums unter Aufrechterhaltung eines vorbestimmten Überdruckes gegenüber dem Vorlaufdruck des Wärmeverbrauchers bis zu Kondensation abgekühlt wird und der Überdruck in einer Strahlpumpe sodann unter Erzeugung einer entsprechenden Treibenergie für den Vorlauf auf den Vorlaufdruck des Wärmeverbrauchers abgebaut wird und dabei dem Vorlauf bei der Auskühlung des Dampfes aufgeheiztes Sekundärmedium zugemischt wird.

2. Verfahren nach Anspruch 1, dadurch gekennzeichnet, dass das kalte Sekundärmedium von dem ausgekühlen Rücklauf des Wärmeverbrauchers abgezweigt wird.

3. Vorrichtung zur Durchführung des Verfahrens nach Anspruch 1 oder 2 mit einem dampfseitig in Abhängigkeit von dem Wärmeverbrauch bei dem Verbraucher geregelten Wärmetauscher, dadurch gekennzeichnet, dass der über ein Regelventil (4) an das Dampfnetz (010) angeschlossene und den zugeführten Dampf bis zur Kondensation auskühlende Wärmetauscher (3) kondensatseitig mit der Treibdüse (7) einer in der Vorlaufleitung (04) des Wärmeverbrauchers (2) liegenden Strahlpumpe (8) verbunden ist, deren Treibdüse (7) mit dem unter einem vorbestimmten Überdruck stehenden Kondensat beaufschlagt ist, und dass die Strahlpumpe (8) saugseitig in einem Sekundärkreislauf (13, 14, 02) des Wärmetauschers (3) liegt, in dem von dem Dampf aufgeheiztes Sekundärmedium fliesst, das über die Strahlpumpe (8) in vorbestimmtem Anteil dem Vorlauf des Wärmeverbrauchers (2) zumischbar ist.

4. Vorrichtung nach Anspruch 3, dadurch gekennzeichnet, dass der Sekundärkreislauf des Wärmetauschers (3) von der über entsprechende Regeleinrichtungen (18) unmittelbar an das Kondensatnetz (012) angeschlossenen Rücklaufleitung (02) des Wärmeverbrauchers abzweigt.

5. Vorrichtung nach Anspruch 3 oder 4, dadurch gekennzeichnet, dass die Strahlpumpe (8) regelbar ist.

6. Vorrichtung nach einem der Ansprüche 3 bis 5, dadurch gekennzeichnet, dass in der Vorlaufleitung (04) des Wärmeverbrauchers (2) strömungsmässig hinter der Strahlpumpe (8) eine zusätzliche Druckerhöhungspumpe (21) liegt.

7. Vorrichtung nach Anspruch 6, dadurch gekennzeichnet, dass die Druckerhöhungspumpe (21) lediglich zeitweise wirksam ist.

8. Vorrichtung nach einem der Ansprüche 4 bis 7, dadurch gekennzeichnet, dass in der Rücklaufleitung (02) des Wärmetauschers (2) strömungsmässig hinter dem Abzweig des Sekundärkreislaufes des Wärmetauschers (3) ein Druckhalteventil (18) liegt.

9. Vorrichtung nach einem der Ansprüche 3 bis 8, dadurch gekennzeichnet, dass der Wärmetauscher (3) zusätzlich einen Brauchwassererwärmer (23) enthält.

10. Vorrichtung nach einem der Ansprüche 3 bis 9, dadurch gekennzeichnet, dass der Wärmetauscher (3) im Bereiche des Sekundärmediumseintritts zusätzlich an eine Entwässerungsleitung (62) des Dampfnetzes (010) angeschlossen ist.

11. Vorrichtung nach einem der Ansprüche 3 bis 10, dadurch gekennzeichnet, dass der Wärmetauscher (3) wenigstens eine dampfgespeiste, ausgangsseitig an die Treibdüse (7) angeschlossene Rohrschlange (5, 50) enthält und die Fangdüse (7) der Strahlpumpe (8) unmittelbar an einen entsprechenden Anschlussstutzen (56) des Wärmetauscherkopfes (53) angeschlossen ist.

12. Vorrichtung nach Anspruch 11, dadurch gekennzeichnet, dass die Strahlpumpe (8) an den Kopf (53) des Wärmetauschers auf der Dampfeintrittsseite angeschlossen ist.

## Claims

1. Method for the regulated transference of heat from a primary steam network to a heat consumer, the feed of which is supplied under a pre-determined excess pressure exceeding the hydrostatic pressure and the return of which is under a lower pressure, characterised in that the steam taken from the steam network in dependence upon the heat consumption at the consumer is cooled down to condensation by heat withdrawal by means of a liquid secondary medium, a pre-determined excess pressure over the feed pressure of the heat consumer being maintained, and the excess pressure is then diminished in a jet pump, a corresponding propulsion energy for the feed being generated, to the feed pressure of the heat consumer, and in this action secondary medium heated up in the cooling down of the steam is admixed to the feed.

2. Method according to Claim 1, characterised in that the cold secondary medium is branched off from the cooled-down return of the heat consumer.

3. Apparatus for carrying out the method according to Claim 1 or 2, with a heat exchanger regulated on the steam side in dependence upon the heat consumption in the consumer, characterised in that the heat exchanger (3), which is connected through a regulating valve (4) to the steam network (010) and cools down the supplied steam to condensation, is connected on the condensate side with the propulsion nozzle (7) of a jet pump (8) lying in the feed conduit (04) of the heat consumer (2), the propulsion nozzle (7) of which jet pump is subject to the action of the condensate, which is under a pre-determined excess pressure, and in that the jet pump (8) lies on the suction side in a secondary circuit (13, 14, 02) of the heat exchanger (3) in which there flows secondary medium heated up by the steam, which secondary medium is admixable by way of the jet pump (8) in pre-determined proportion to the feed of the heat consumer (2).

4. Apparatus according to Claim 3, characterised in that the secondary circuit of the heat exchanger (3) branches off from the return conduit (02) of the heat consumer, which is connected by way of appropriate regulating devices (18) directly to the condensate network (012).

5. Apparatus according to Claim 3 or 4, characterised in that the jet pump (8) is regulable.

6. Apparatus according to one of Claims 3 to 5, characterised in that an additional pressure-boosting pump (21) lies in the feed conduit (04) of the heat consumer (2) behind the jet pump (8) in the direction of flow.

7. Apparatus according to Claim 6, characterised in that the pressure boosting pump (21) is effective only at times.

8. Apparatus according to one of Claims 4 to 7, characterised in that a pressure-retaining valve (18) lies in the return conduit (02) of the heat consumer (2), behind the branch of the secondary circuit of the heat exchanger (3), in the direction of flow.

9. Apparatus according to one of Claims 3 to 8, characterised in that the heat exchanger (3) additionally contains a heater (23) for hot water supply.

10. Apparatus according to one of Claims 3 to 9, characterised in that the heat exchanger (3) is additionally connected, in the region of the secondary medium entry, to a water drain conduit (62) of the steam network (010).

11. Apparatus according to one of Claims 3 to 10, characterised in that the heat exchanger (3) contains at least one steam-fed pipe coil (5, 50) connected on the output side ot the propulsion nozzle (7) and the collector nozzle (7) of the jet pump (8) is connected directly to a corresponding connection piece (56) of the heat exchanger head (53).

12. Apparatus according to Claim 11, characterised in that the jet pump (8) is connected to the head (53) of the heat exchanger on the steam entry side.

## Revendications

1. Procédé pour le transfert de chaleur réglée d'un réseau de vapeur primaire à un utilisateur de chaleur dont le fluide aller est amené à une surpression prédéterminée dépassant la pression hydrostatique et dont le fluide retour est à une pression inférieure, caractérisé par le fait que la vapeur prélevée sur le réseau de vapeur en fonction de la consommation de chaleur dans l'utilisateur est refroidie jusqu'à condensation par absorption de chaleur au moyen d'un fluide secondaire liquide avec maintien d'une surpression prédéterminée par rapport à la pression d'alimentation de l'utilisateur de chaleur, et la surpression est ensuite abaissée dans un éjecteur avec production d'une énergie dynamique correspondante pour porter le fluide aller à la pression d'alimentation de l'utilisateur de chaleur et qu'au fluide aller est alors ajouté du fluide secondaire chauffé avec le refroidissement de la vapeur.

2. Procédé selon la revendication 1, caractérisé par le fait que le fluide secondaire froid est prélevé sur le fluide retour refroidi de l'utilisateur de chaleur.

3. Dispositif pour la mise en œuvre du procédé selon la revendiction 1 ou 2 avec un échangeur de chaleur réglé, côté vapeur, en fonction de la consommation de chaleur de l'utilisateur, caractérisé par le fait que l'échangeur de chaleur (3), relié au réseau de vapeur (010) par l'intermédiaire d'une valve de réglage (4) et refroidissant jusqu'à la condensation la vapeur qui lui est amenée est raccordé, côté condensat, à la tuyère d'éjection (7) d'un éjecteur (8) qui est placé dans la conduite d'alimentation (04) de l'utilisateur de chaleur (2) et dont la tuyère d'éjection (7) reçoit le condensat se trouvant à une surpression prédéterminée, et que l'éjecteur (8), côté aspiration, est placé dans un circuit secondaire (13, 14, 02) de l'échangeur de chaleur (3) dans lequel s'écoule du fluide secondaire qui est chauffé par la vapeur et qui peut être mélangé par l'éjecteur (8) en proportion prédéterminée au fluide aller alimentant l'utilisateur de chaleur (2).

4. Dispositif selon la revendication 3, caractérisé par le fait que le circuit secondaire de l'échangeur de chaleur (3) part de la conduite retour (02) de l'utilisateur de chaleur qui est directement raccordée au réseau de condensat (012) par des dispositifs de régulation (18) correspondants.

5. Dispositif selon la revendication 3 ou 4, caractérisé par le fait que l'éjecteur (8) est réglable.

6. Dispositif selon l'une des revendications 3 à 5, caractérisé par le fait qu'une pompe de surpression supplémentaire (21) est installée derrière l'éjecteur (8), vu dans le sens de l'écoulement, dans la conduite d'alimentation (04) de l'utilisateur de chaleur.

7. Dispositif selon la revendication 6, caractérisé par le fait que la pompe de surpression (21) n'est active que par moments.

8. Dispositif selon l'une des revendications 4 à 7, caractérisé par le fait qu'une valve de maintien de pression (18) est placée dans la conduite retour (02) de l'utilisateur de chaleur (2) derrière le branchement, vu dans le sens de l'écoulement, du circuit secondaire de l'échangeur de chaleur (3).

9. Dispositif selon l'une des revendications 3 à 8, caractérisé par le fait que l'échangeur de chaleur (3) contient en outre un réchauffeur d'eau industrielle (23).

10. Dispositif selon la revendication 3 à 9, caractérisé par le fait que l'échangeur de chaleur (3) dans la zone de l'entrée du fluide secondaire est en outre raccordé à une conduite d'évacuation d'eau (62) du réseau de vapeur (010).

11. Dispositif selon l'une des revendications 3 à 10, caractérisé par le fait que que l'échangeur de chaleur (3) contient au moins un serpentin (5, 50) alimenté en vapeur et raccordé, côté sortie, à la tuyère d'éjection (7) et que la tuyère de refoulement (58) de l'éjecteur (8) est directement reliée à une tubulure de raccordement (56) correspondante de la partie supérieure (53) de l'échangeur de chaleur.

12. Dispositif selon la revendication 11, caractérisé par le fait que l'éjecteur (8) est relié à la partie supérieure (53) de l'échangeur de chaleur du côté entrée de vapeur.

Fig. 3

Fig. 1

Fig. 2